Europäisches Patentamt

European Patent Office

Office européen des brevets

(11) Publication number: **0 074 278**
**B1**

(12) **EUROPEAN PATENT SPECIFICATION**

(45) Date of publication of patent specification: **12.08.87**

(51) Int. Cl.⁴: **B 01 D 53/34,** C 01 B 17/05,
C 10 K 1/12

(21) Application number: **82304721.2**

(22) Date of filing: **08.09.82**

(54) Treatment of contaminated Stretford solutions in gas purification.

(30) Priority: **08.09.81 US 300085**

(43) Date of publication of application:
**16.03.83 Bulletin 83/11**

(45) Publication of the grant of the patent:
**12.08.87 Bulletin 87/33**

(84) Designated Contracting States:
**BE CH DE FR IT LI NL**

(56) References cited:
**EP-A-0 002 880**
**EP-A-0 014 950**
**US-A-3 810 833**
**US-A-3 959 452**
**US-A-4 017 594**
**US-A-4 206 194**

(73) Proprietor: **THE DOW CHEMICAL COMPANY**
**2030 Dow Center Abbott Road P.O. Box 1967**
**Midland, MI 48640 (US)**

(72) Inventor: **Wolcott, Richard Alan**
**1250 North Highway 288 No. 26**
**Richwood Texas 77531 (US)**

(74) Representative: **Allard, Susan Joyce et al**
**BOULT, WADE & TENNANT 27 Furnival Street**
**London EC4A 1PQ (GB)**

Courier Press, Leamington Spa, England.

# 0 074 278

**Description**

The present invention relates to recovering the anthraquinone disulfonate and vanadate from Stretford process solutions used in gas purification, and the recycling of the anthraquinone disulfonate and vanadate to the process solution.

The Stretford process is well known in the art of gas purification for the removal of $H_2S$ from "foul gas" or "tail gas" streams of various compositions and origins, such as gas streams resulting from refining of petroleum or coal products. The Stretford process employs, fundamentally, an alkaline aqueous solution comprising a salt of an anthraquinone disulfonic acid, such as $Na_2$—ADA, and a vanadium salt, such as sodium vanadate. During its use, the Stretford solution acting on the $H_2S$ and other gas components, builds up various levels of side-products such as sodium thiosulfate, sodium sulfate, and various alkalinities such as sodium carbonate and sodium bicarbonate, due to reaction with the alkali (preferably NaOH) employed to maintain the solution alkaline.

In particular, the present invention is directed to a process whereby a portion of the Stretford solution is removed as a side-stream in order to maintain the build-up of various side-products to a controllable, allowable concentration, the process being particularly effective in substantially removing sodium sulfate and sodium thiosulfate in the side-stream, while recovering a substantial amount of the NaADA or $Na_2$ADA and the vanadium salt, both of these components being recycled to the Stretford solution. Thus, as the Stretford solution is continuously cycled through its use step and through its recovery, clean-up, and replenishment steps, the level of undesirable sulfate and thiosulfate is effectively controlled, the loss of expensive NaADA or $Na_2$ADA and vanadium salt is substantially minimized, and the alkalinity or basicity of the solution is maintained. This process effectively avoids the need for acidification of the Stretford solution to destroy the thiosulfate, which would then require re-alkalizing; the re-alkalizing forms soluble salts of the acid used for acidification.

There are numerous patents relating to the Stretford process and to handling, using, or treating the Stretford solution, e.g., U.S. 2,997,439; U.S. 3,035,889; U.S. 3,097,926; U.S. 3,752,877; U.S. 3,904,734; U.S. 3,959,452; U.S. 3,975,508; U.S. 4,017,594; U.S. 4,118,467; U.S. 4,206,194; and European Patent Application Publ. No. 0 002 880 A3 having an Application Number 78300471.6 filed 09.10.78.

The most relevant prior art is believed to be EP—A—0014950 which describes a process for treating a used particle-free Stretford process aqueous alkaline solution containing disodium anthraquinone disulfonate and sodium vanadate and further containing sodium carbonate, sodium bicarbonate, sodium thiosulfate, sodium sulfate and sodium hydroxide, the process comprising separating the anthraquinone disulfonate from the solution, thereby obtaining a solution which is substantially depleted of anthraquinone disulfonate. The alkaline aqueous solution thus obtained is passed through a gas rich in CO, whereby the thiosulfate and sulfate are transformed into carbonates.

US—A—3810833 is also relevant prior art and refers to a process for treating an aqueous solution derived from the Stretford process. The main steps of this process comprise contacting the solution with activated carbon to separate the anthraquinone disulfonate from the solution and then contacting the so-treated solution with an anion exchange resin to separate the vanadate from the solution, thereby obtaining an aqueous solution which is substantially depleted of anthraquinone disulfonate and vanadate. The solution which is treated by this process is an acid solution which no longer contains any thiosulfate and sulfate.

According to the present invention there is provided a process for treating a used, sulfur particle-free, Stretford process alkaline aqueous solution containing disodium anthraquinone disulfonate and sodium vanadate and further containing sodium carbonate, sodium bicarbonate, sodium thiosulfate, sodium sulfate and sodium hydroxide, the process comprising the step of separating the anthraquinone disulfonate from the solution thereby obtaining an alkaline aqueous solution which is substantially depleted of anthraquinone disulfonate, wherein the step of separating the anthraquinone disulfonate consists in contacting the solution with activated carbon and wherein a further step consists in contacting the so-treated solution with an anion exchange resin to separate the vanadate from the solution, thereby obtaining an alkaline aqueous solution which is not only substantially depleted of anthraquinone disulfonate but also of vanadate and which contains most, if not all, of the sodium thiosulfate and sodium sulfate.

It is preferred that the solution is separated from a mainstream used Stretford process liquid which contains sulfur particles, the sulfur particles being removed by filtration, for instance, so that there are no significant quantities of sulfur particles in the filtrate. The anthraquinone disulfonate ions and vanadate ions may then be recovered from the activated carbon and the ion exchange resin and recycled to the mainstream for further use.

Ideally there should not be any particles whatsoever in the solution, since if significant quantities of particles are present the activated carbon and the ion exchange resin require frequent back-washing to prevent plugging.

In the preferred embodiment a portion of an alkaline aqueous solution (viz. a "Stretford Solution") containing a salt of anthraquinone disulfonic acid (ADA), a vanadium salt, soluble alkalinities, sulfate values and thiosulfate values is separated as a side-stream from the sulfur particle-containing mainstream. The sidestream is contacted with activated charcoal which takes up the ADA from the solution, then is

2

contacted with an anion exchange resin to take up the vanadium values from the solution, the thiosulfate and sulfate values substantially remaining with the solution. The ADA and vanadium values are recovered from the charcoal and exchange resin using an aqueous wash and are recycled to the Stretford solution for further use. An alkaline wash is used to regenerate the exchange resin.

The Stretford solution for use in the present invention is one which contains the requisite amount of ADA-salt (especially $Na_2$—ADA), of vanadium salt (especially sodium vanadate), of side products of the alkaline material (especially NaOH) used in maintaining the solution at a basic pH, and a sulfate and/or thiosulfate side-product (e.g. $Na_2S_2O_3$ and $Na_2SO_4$).

Ordinarily the amount of ADA-salt in the solution is maintained in the range of 1 to 5 gm/liter, though greater or lesser concentrations may sometimes be encountered. The preferred concentration is usually in the range of 1.5 to 3.0 gm/liter.

The amount of vanadium salt in the solution is usually in the range of 4 to 6 gm/liter, preferably 5.5 to 6.0 gm/liter, though greater or lesser concentrations may sometimes be encountered.

The amount of alkaline material (especially NaOH) employed to maintain the Stretford solution at a basic pH is somewhat dependent on the amount of acid or other reactants in a given volume of gas being treated. The CO, $CO_2$, $H_2S$, $SO_2$, etc. reacts with the alkaline material to form salts. Thiosulfates are formed from NaHS and oxygen. Ordinarily there is an amount of alkaline material in the Stretford solution, including make-up amounts, sufficient to maintain an alkaline pH, preferably a pH of 8.5 to 9.0.

The temperature of the Stretford solution is principally determined by the amount of heat taken up from contact with the hot tail gases. Due to heat losses from the piping and equipment, the temperature of the Stretford solution at the point in the process at which the present invention is applied is still fairly warm, usually being in the range of 30°C to 40°C. The aqueous wash (which may be alkaline) used in regenerating the activated carbon may be at ambient temperature, but is preferably in the range of 35°C to 100°C, most preferably at or near 100°C. The alkaline aqueous wash of the anion exchange resin may be at ambient temperature, and is preferably in the range of 35°C to 50°C. Higher temperatures may be used if the resin stability against decomposition or degradation is not jeopardized by such higher temperatures. The water-eluted NaADA and $Na_2$ADA and alkaline material eluted vanadium salt from the activated carbon and exchange resin, respectively, are usually recycled back to the circulating Stretford solution without adjustment of temperature. The anion exchange resin usually takes up an appreciable portion of any carbonate and bicarbonate ions in the Stretford solution and these are also washed out by the alkaline material wash along with the vanadium salt and are also returned to the Stretford solution. In comparison with the cost of the NaADA or $Na_2$ADA and vanadium salt, the extraneous carbonate, bicarbonate, sulfate, thiosulfate, sulfur, and other such compounds have relatively little value.

During the washing of the NaADA or $Na_2$ADA loaded charcoal with water or alkaline material, e.g., NaOH, to wash out the NaADA or $Na_2$ADA, which is preferably done using very hot (up to about 100°C) water or alkaline material, e.g., NaOH, there sometimes is a relatively small amount of sulfate, thiosulfate or other side-products from the Stretford solution which are also washed out of the activated carbon, but these are in tolerable amounts and may be re-cycled along with the ADA.

Washing of the anion exchange resin with alkaline material to wash out the vanadium compounds and regenerate the resin may be done at from ambient temperature to 100°C (if the resin will withstand hot alkaline material), but is preferably done at a temperature in the range of about 35°C to about 50°C. Conveniently, the regeneration is done with the alkaline material at a temperature closely approximating the temperature of the Stretford solution when it passes through the resin. The alkaline effluent from the wash cycle brings out the vanadium salt and usually contains tolerable amounts of the carbonate, bicarbonate and other side products of the Stretford solution which may have remained in the resin following the resin loading step. The alkaline material wash from the resin can be employed as the wash liquor for the activated carbon especially if heated to a temperature of up to about 100°C.

The anion exchange resin may be any of the strong or weak base resins available for use as anion exchange resins, but preferably the resin is one of the strong base variety. Of the anion exchange resins available some are of the porous variety and some of the gel-type.

The activated carbon may be any of the commercially available finely-divided chars having activated, highly absorbent surfaces. By "activated carbon" and "chars" it is meant that any of the known activated carbon char materials derived from carbonaceous materials may be used.

NaOH is the preferred alkaline material to be used in the present invention, especially because it is readily available and relatively inexpensive, but other alkali metal hydroxides, such as KOH, may be used. If commercial grades of such alkalies are used which contain chloride impurities, these impurities may build up to a undesirable concentration unless steps are taken to limit the build-up. The present invention is beneficial with respect to chloride build-up in that while the process is effective in substantially removing sulfates and thiosulfates from the treated side-streams, it also substantially removes $Cl^-$ ions at the same time. For instance, a sulfur particle-free portion of Stretford solution containing 3800 ppm $Cl^-$ (among its other ingredients) is passed through an activated carbon filter, then through an anion exchange bed, and the solution is found to still contain 3620 ppm $Cl^-$ ion, the solution at this point being purged from the system; thus over 95% of the $Cl^-$ ion from the portion of Stretford solution is removed and not re-cycled.

In place of the preferred hot water or hot alkaline material wash for the activated carbon desorption step, one may use aqueous solutions containing inert organic compounds such as acetone or methylene chloride. For instance, it has been determined that water/acetone (3/1 ratio @ 34°C) and water/methylene chloride (3/1 ratio @ 34°C) can be used to recover NaADA or $Na_2ADA$ from the activated carbon. This is beneficial as it allows regeneration of the activated carbon at relatively lower temperature, but it may be advisable to substantially remove the organic portion prior to recycle to the Stretford solution.

Example 1

A 700-ml. portion of Stretford solution is taken as a side-stream from an alkaline mainstream of Stretford solution containing dispersed particles of sulfur, a filter being used to keep the particulate sulfur in the mainstream. The side-stream of Stretford solution (34°C, pH 8.8) is passed through a column containing 120 ml of activated carbon, 12—40 mesh and derived from bituminous coal, at 6.5 ml/min. The effluent is then passed through a 120 ml column of a strong base macroporous anion exchange resin ($OH^-$ form, 20—50 mesh). The effluent from the resin is discarded.

Recovery of the $Na_2ADA$ from the activated carbon is accomplished by passing 700 ml. of 100°C water (neutral pH) through the column at 6.5 ml/min. Recovery of sodium vanadate, sodium carbonate, and sodium bicarbonate from the resin is accomplished by passing 630 ml of 34°C aqueous sodium hydroxide (4% concentration) through the resin at 6.5 ml/min.

The following Table I indicates the approximate amounts of ADA, vanadate, sodium bicarbonate, sodium carbonate, sodium thiosulfate, and sodium sulfate to be found in the various solutions. Amounts shown are in gms. per liter.

TABLE I

| Identity of Solution | Per Cycle Analysis of Solutions | | | | | |
|---|---|---|---|---|---|---|
| | ADA | V[1] | Bicarb.[2] | Carb.[3] | Thio[4] | Sulf.[5] |
| Stretford, at the start | 1.87 | 6.0 | 4 | 7 | 310 | 28 |
| Stretford, after carbon | 0.04 | 5.8 | 3 | 7 | 285 | 28 |
| Aq. eluate from carbon | 1.85 | 0 | 0 | 0 | 0 | 2 |
| Stretford, after resin | 0 | 0.8 | 2 | 3 | 260 | 26 |
| Alkaline eluate from resin | 0 | 6.3 | 5 | 40 | 20 | 0 |

[1]vanadate; [2]bicarbonate; [3]carbonate; [4]thiosulfate; [5]sulfate.

By calculation, the recovery of ADA is about 96% and recovery of vanadate is about 94%. The sulfate and thiosulfate compounds are substantially retained in the discarded effluent.

Example 2

A material balance is made by accounting for the ingredients in the recovery stream and the waste (purge) stream and comparing with ingredients used in the feed solution and the regeneration solution.

The feed solution (i.e. the beginning Stretford solution) during the material banance monitoring contains (all quantities being parts by weight):

| | |
|---|---|
| $H_2O$ | 38,724.0 |
| Alkalinity | 373.4 |
| $NaVO_3$ | 225.8 |
| ADA | 83.8 |
| $Na_2S_2O_3$ (as the pentahydrate) | 11,853.0 |
| $Na_2SO_4$ | 1,064.0 |

The regeneration solution employed during the monitoring comprises:

| | |
|---|---|
| $H_2O$ | 59,803.8 |
| NaOH | 625.4 |

**0 074 278**

The above quantities represent the total amounts *into* the process. The total amounts *out* of the process are represented by the amounts in the purge (waste stream) and the recovery stream (for use as recycle).

The purge during the monitoring is:

| | |
|---|---|
| NaOH | 267.8 |
| $H_2O$ | 38,724.0 |
| Alkalinity | 260.5 |
| $NaVO_3$ | 34.7 |
| ADA | 0 |
| $Na_2S_2O_3$ (as the pentahydrate) | 11,289.0 |
| $Na_2SO_4$ | 988.0 |

The recovery during the monitoring is:

| | |
|---|---|
| NaOH | 357.6 |
| $H_2O$ | 59,803.8 |
| Alkalinity | 112.8 |
| $NaVO_3$ | 191.1 |
| ADA | 83.8 |
| $Na_2S_2O_3$ (as the pentahydrate) | 564.0 |
| $Na_2SO_4$ | 76.0 |

From the above figures the amount of recovery of ADA, $NaVO_3$, alkalinity, and NaOH is about:

| | | | |
|---|---|---|---|
| ADA | 100% | Alkalinity | 30.2% |
| $NaVO_3$ | 84.6% | NaOH | 57.2% |
| $Na_2S_2O_3 \cdot 5H_2O$ | 4.8% | $NaSO_4$ | 7.1% |

The amounts in the purge are about:

| | | | |
|---|---|---|---|
| $Na_2S_2O_3 \cdot 5H_2O$ | 95.2% | Alkalinity | 69.8% |
| $NaVO_3$ | 15.4% | NaOH | 42.8% |
| $Na_2SO_4$ | 92.9% | | |

In the above ingredients the term "alkalinity" is used to account for compounds which have formed salts with the NaOH during the tail gas scrubbing operation using the alkaline Stretford solution, such as sodium carbonate and sodium bicarbonate, but the sodium thiosulfate and sodium sulfate are treated as separate items.

**Claims**

1. A process for treating a used, sulfur particle-free, Stretford process alkaline aqueous solution containing disodium anthraquinone disulfonate and sodium vanadate and further containing sodium carbonate, sodium bicarbonate, sodium thiosulfate, sodium sulfate and sodium hydroxide, the process comprising the step of separating the anthraquinone disulfonate from the solution thereby obtaining an alkaline aqueous solution which is substantially depleted of anthraquinone disulfonate, characterized in that the step of separating the anthraquinone disulfonate consists in contacting the solution with activated carbon and in that a further step consists in contacting the so-treated solution with an anion exchange resin to separate the vanadate from the solution, thereby obtaining an alkaline aqueous solution which is not

5

only substantially depleted of anthraquinone disulfonate but also of vanadate and which contains most, if not all, of the sodium thiosulfate and sodium sulfate.

2. A process as claimed in claim 1 wherein the solution to be treated is made sulfur particle-free by filtration.

3. A process as claimed in claim 1 or claim 2 wherein the anion exchange resin is regenerated by using an alkaline aqueous wash to elute the vanadate.

4. A process as claimed in claim 3 wherein the alkaline aqueous wash is carried out at a temperature in the range of from 35°C to 100°C.

5. A process as claimed in claim 4 wherein the temperature is in the range of from 35°C to 50°C.

6. A process as claimed in claim 2 wherein, the vanadate is eluted from the anion exchange resin by a process as claimed in any one of claims 3 to 5, and the so-recovered vanadate is recycled back to the solution to be utilized in the Stretford process.

**Patentansprüche**

1. Verfahren zum Behandeln einer gebrauchten, schwefelpartikelfreien alkalischen wäßrigen Lösung des Stretford-Prozesses, die Dinatriumantrachinon-disulfonat und Natriumvanadat enthält und außerdem Natriumcarbonate, Natriumbicarbonat, Natriumthiosulfat, Natriumsulfat und Natriumhydroxid enthält, umfassend den Schritt zum Abtrennen des Anthrachinon-disulfonats aus der Lösung, wobei eine alkalische wäßrige Lösung erhalten wird, die im wesentlichen frei von Anthrachinon-disulfonat ist, dadurch gekennzeichnet, daß der Schritt zum Abtrennen des Anthrachinon-disulfonates aus dem Inkontaktbringen der Lösung mit Aktivkohle besteht und daß ein weiterer Schritt besteht aus dem Inkontaktbringen der so behandelten Lösung mit einem Anionenaustauscherharz, um das Vanadat von der Lösung abzutrennen, wobei eine alkalische wäßrige Lösungh erhalten wird, die nicht nur im wesentlichen frei von Anthrachinon-disulfonat, sondern auch von Vanadat ist und die das meiste, wenn nicht alles, Natriumthiosulfat und Natriumsulfat enthält.

2. Verfahren nach Anspruch 1, bei dem die zu behandelnde Lösung durch Filtration schwefelpartikelfrei gemacht wird.

3. Verfahren nach Anspruch 1 oder 2, bei dem das Anionenaustauschharz durch die Verwendung einer alkalischen wäßrigen Wäsche regeneriert wird, um das Vanadat zu eluieren.

4. Verfahren nach Anspruch 3, bei dem die alkalische wäßrige Wäsche bei einer Temperatur im Bereich von 35 bis 100°C durchgeführt wird.

5. Verfahren nach Anspruch 4, bei dem die Temperatur im Bereich von 35 bis 50°C liegt.

6. Verfahren nach Anspruch 2, bei dem das Vanadat durch ein Verfahren nach einem der Ansprüche 3 bis 5 von dem Anionenaustauscherharz eluiert wird und das so wiedergewonnene Vanadat in die Lösung recyclisiert wird, die in dem Stretford-Verfahren verwendet wird.

**Revendications**

1. Un procédé pour traiter une solution aqueuse alcaline selon le procédé de Stretford exempt de particules de soufre et usagée contenant du disulfonate d'anthraquinone disodique et du vanadate de sodium et contenant de plus du carbonate de sodium, du bicarbonate de sodium, du thiosulfate de sodium, du sulfate de sodium et de l'hydroxyde de sodium, le procédé comprenant une étape de séparation du disulfonate d'anthraquinone de la solution obtenant ainsi une solution aqueuse alcaline dans laquelle le disulfonate d'anthraquinone est considérablement diminué, caractérisé par le fait que l'étape de séparation du disulfonate d'anthraquinone consiste en la mise en contact de la solution avec du carbone activé et par le fait que l'étape supplémentaire consiste en une mise en contact de la solution ainsi traitée avec une résine échangeuse d'anions pour séparer le vanadate de la solution, obtenant ainsi une solution aqueuse alcaline dans laquelle non seulement le disulfonate d'anthraquinone est considérablement diminué, mais aussi le vanadate et qui contient la majeure partie, si ce n'est la totalité, du thiosulfate de sodium et du sulfate de sodium.

2. Un procédé selon la revendication 1 dans lequel la solution traitée est séparée de toutes particules de soufre par filtration.

3. Un procédé selon la revendication 1 ou 2 dans lequel la résine échangeuse d'anions·est regénérée en utilisant un lavage aqueux alcalin pur éleur le vanadate.

4. Un procédé selon la revendication 3 dans lequel le lavage aqueux alcalin est réalisé à une température comprise entre 35°C et 100°C.

5. Un procédé selon la revendication 4 dans lequel la température est comprise entre 35°C et 50°C.

6. Un procédé selon la revendication 2 dans lequel le vanadate est élué à partir de la résine échangeuse d'anions par un procédé selon l'une quelconque des revendications 3 à 5, et le vanadate ainsi récupéré est recyclé vers la solution pour être utilisé dans le procédé de Stretford.